# EUROPEAN PATENT APPLICATION

(11) **EP 4 113 476 A1**
(43) Date of publication of application: **04.01.2023**
(21) Application number: 22164623.5
(22) Date of filing: 28.03.2022
(51) Int. Cl.: G08G 1/095, G08G 1/07, G08G 1/097

(54) **DATA PROCESSING METHOD AND APPARATUS, ELECTRONIC DEVICE AND READABLE STORAGE MEDIUM**

(30) Priority: 30.06.2021 CN 202110739129
(71) Applicant: Apollo Intelligent Connectivity (Beijing) Technology Co., Ltd., Beijing (CN)
(72) Inventor: SHEN, Donghui, Beijing (CN)
(74) Representative: dompatent von Kreisler Selting Werner - Partnerschaft von Patent- und Rechtsanwälten mbB

(57) **Abstract**

The present disclosure provides a data processing method and apparatus, an electronic device and a readable storage medium, and relates to the field of intelligent transportation technologies. The data processing method includes: acquiring a light-state data stream of a signal machine, the light-state data stream including a plurality of light-state data frames arranged in chronological order; determining a target light-state data frame in the light-state data stream and a target time of the target light-state data frame; acquiring a timing scheme of the signal machine; and generating, according to the timing scheme and the target light-state data frame, at least one light-state data frame at a time before and/or after the target time. In this embodiment, a purpose of restoring and/or predicting all data frames in the light-state data stream can be achieved, so as to improve accuracy of all the data frames in the light-state data stream and improve utilization of the light-state data stream.

## Description

### Field of the Disclosure

The present disclosure relates to the field of data processing technologies, and in particular, to the field of intelligent transportation technologies. A data processing method and apparatus, an electronic device and a readable storage medium are provided.

### Background of the Disclosure

In the prior art, stability and reliability of a transmission network are greatly depended on when a signal machine transmits light-state data frames corresponding to different times to a server side. When the stability and the reliability of the transmission network are poor, delays or errors may occur in a light-state data frame corresponding to a certain time acquired by the server side, which may greatly reduce accuracy of light-state data streams of the signal machine, thereby correspondingly reducing utilization of the light-state data streams.

### Summary of the Disclosure

According to a first aspect of the present disclosure, a data processing method is provided, including: acquiring a light-state data stream of a signal machine, the light-state data stream including a plurality of light-state data frames arranged in chronological order; determining a target light-state data frame in the light-state data stream and a target time of the target light-state data frame; acquiring a timing scheme of the signal machine; and generating, according to the timing scheme and the target light-state data frame, at least one light-state data frame at a time before and/or after the target time.

According to a second aspect of the present disclosure, a data processing apparatus is provided, including: a first acquisition unit configured to acquire a light-state data stream of a signal machine, the light-state data stream including a plurality of light-state data frames arranged in chronological order; a determination unit configured to determine a target light-state data frame in the light-state data stream and a target time of the target light-state data frame; a second acquisition unit configured to acquire a timing scheme of the signal machine; and a generation unit configured to generate, according to the timing scheme and the target light-state data frame, at least one light-state data frame at a time before and/or after the target time.

According to a third aspect of the present disclosure, an electronic device is provided, including: at least one processor; and a memory in communication connection with the at least one processor; wherein the memory stores instructions executable by the at least one processor, and the instructions are executed by the at least one processor to enable the at least one processor to perform the method as described above.

According to a fourth aspect of the present disclosure, a non-transitory computer-readable storage medium storing computer instructions is provided, wherein the computer instructions are configured to cause a computer to perform the method as described above.

According to a fifth aspect of the present disclosure, a computer program product including a computer program is provided, wherein, when the computer program is executed by a processor, the method as described above is performed.

As can be seen from the above technical solutions, in this embodiment, after a target light-state data frame in a light-state data stream of a signal machine is determined, at least one light-state data frame at a time before and/or after a target time of the target light-state data frame may be generated in combination with a timing scheme of the signal machine, which achieves a purpose of restoring and/or predicting light-state data frames in the light-state data stream and can improve accuracy of the light-state data frames in the light-state data stream, thereby correspondingly improving utilization of the light-state data stream.

It should be understood that the content described in this part is neither intended to identify key or significant features of the embodiments of the present disclosure, nor intended to limit the scope of the present disclosure. Other features of the present disclosure will be made easier to understand through the following description.

### Brief Description of Drawings

The accompanying drawings are intended to provide a better understanding of the solutions and do not constitute a limitation on the present disclosure. In the drawings,
FIG. 1 is a schematic diagram of a first embodiment according to the present disclosure;
FIG. 2 is a schematic diagram of a second embodiment according to the present disclosure; and
FIG. 3 is a block diagram of an electronic device configured to perform a data processing method according to embodiments of the present disclosure.

### Detailed Description of Preferred Embodiments

Exemplary embodiments of the present disclosure are illustrated below with reference to the accompanying drawings, which include various details of the present disclosure to facilitate understanding and should be considered only as exemplary. Therefore, those of ordinary skill in the art should be aware that various changes and modifications can be made to the embodiments described herein without departing from the scope and spirit of the present disclosure. Similarly, for clarity and simplicity, descriptions of well-known functions and structures are omitted in the following description.

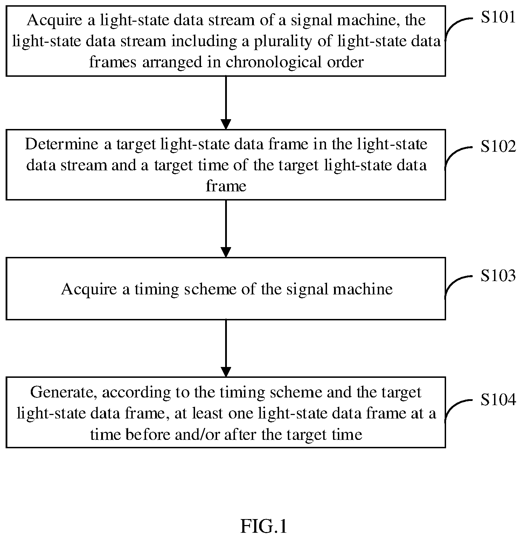

FIG. 1 is a schematic diagram of a first embodiment according to the present disclosure. As shown in FIG. 1, a data processing method according to this embodiment may specifically include the following steps.

In S101, a light-state data stream of a signal machine is acquired, the light-state data stream including a plurality of light-state data frames arranged in chronological order.

In S102, a target light-state data frame in the light-state data stream and a target time of the target light-state data frame are determined.

In S103, a timing scheme of the signal machine is acquired.

In S104, at least one light-state data frame at a time before and/or after the target time is generated according to the timing scheme and the target light-state data frame.

In the data processing method according to this embodiment, after a target light-state data frame in a light-state data stream of a signal machine is determined, at least one light-state data frame at a time before and/or after a target time of the target light-state data frame may be generated in combination with a timing scheme of the signal machine, which achieves a purpose of restoring and/or predicting light-state data frames in the light-state data stream and can improve accuracy of the light-state data frames in the light-state data stream, thereby correspondingly improving utilization of the light-state data stream.

It may be understood that the data processing method according to this embodiment may be performed by the signal machine or a server side of the signal machine sending a light-state data frame at each time.

The signal machine in this embodiment is a device for displaying signals. Specifically, the signal machine in this embodiment may be a traffic signal light located at a road intersection. The traffic light corresponds to a plurality of phases, which correspond to, for example, 8 phases, namely, north straight, north left, south straight, south left, west straight, west left, east straight and east left, for controlling the traffic at the road intersection.

In this embodiment, the light-state data stream acquired by performing S101 includes a plurality of light-state data frames arranged in chronological order. Each light-state data frame includes light-state information of all phases of the signal machine at corresponding times. The light-state information of each phase includes information such as a light color state and a light color countdown of the phase at a corresponding time.

In this embodiment, after S101 is performed to acquire the light-state data stream, S102 is performed to determine a target light-state data frame in the light-state data stream and a target time of the target light-state data frame.

In this embodiment, the light-state data stream acquired by performing S101 may include a wrong light-state data frame. For example, a light-state data frame at a certain time is obtained by copying a light-state data frame at a previous time. Therefore, in this embodiment, S102 is performed to determine a target light-state data frame in the light-state data stream. that is, a correct light-state data frame is found from the light-state data stream.

Specifically, in this embodiment, when S102 is performed to determine a target light-state data frame in the light-state data stream, the following optional implementation manner may be adopted: selecting two light-state data frames from the light-state data stream; comparing the two light-state data frames selected, wherein light-state information of all phases included in the two light-state data frames are specifically compared; and taking the latter of the two light-state data frames as the target light-state data frame in a case where a comparison result is the two light-state data frames being inconsistent with each other. That is, the light-state data frame further back in time in the two light-state data frames is taken as the target light-state data frame.

In this embodiment, when S102 is performed to select two light-state data frames from the light-state data stream, the following optional implementation manner may be adopted: setting a window of a preset length, wherein the preset length in this embodiment may be 2, indicating that each window includes two light-state data frames; sliding the window in the light-state data stream at a preset step size, wherein the preset step size in this embodiment may be 1, that is, the window is slid to the latest time at an interval of 1 second; and selecting a first light-state data frame and a last light-state data frame located in the window.

In addition, in this embodiment, when S102 is performed to select two light-state data frames from the light-state data stream, any two adjacent light-state data frames may be selected, or a light-state data frame at a current time and a light-state data frame at a previous time may be selected.

In this embodiment, after S102 is performed to determine the target light-state data frame, the target time of the target light-state data frame is determined. In this embodiment, the target time determined by performing S102 is a time at which the signal machine sends the target light-state data frame.

In this embodiment, after S102 is performed to determine the target light-state data frame and the target time corresponding thereto, S103 is performed to acquire a timing scheme of the signal machine.

In this embodiment, the timing scheme acquired by performing S103 is configured to allow the signal machine to control a light color and a light color countdown of each phase. The acquired timing scheme includes information such as a preset light color sequence of each phase and a preset duration of each light color.

If the timing scheme of the signal machine does not change under any circumstance, in this embodiment, when S103 is performed, a preset timing scheme may be directly acquired as the timing scheme of the signal machine.

However, in an actual scenario, traffic conditions at road intersections may change rapidly, and in order to better control the traffic conditions at the road intersections, the timing scheme of the signal machine may also change constantly. Since the timing scheme of may affect the accuracy of the generated correct light-state data frame, in this embodiment, a timing scheme corresponding to the determined target light-state data frame is required to be acquired.

In order to further improve the accuracy of the generated correct light-state data frame, in this embodiment, when S103 is performed to acquire the timing scheme of the signal machine, the following optional implementation manner may be adopted: acquiring the timing scheme of the signal machine at the determined target time. That is, this embodiment can ensure correlation between the acquired timing scheme and the determined target light-state data frame.

In this embodiment, after S103 is performed to acquire the timing scheme of the signal machine, S104 is performed to generate, according to the acquired timing scheme and the target light-state data frame, at least one light-state data frame at a time before and/or after the determined target time. In this embodiment, the light-state data frames generated by performing S104 are correct light-state data frames corresponding to various times.

That is, in this embodiment, the at least one light-state data frame at the time before and/or after the determined target time is generated by combining the target light-state data frame and the timing scheme. Since the generated light-state data frame includes correct light-state information of each phase, a purpose of accurately restoring and/or accurately predicting the light-state data frame can be achieved.

Specifically, in this embodiment, when S104 is performed to generate, according to the timing scheme and the target light-state data frame, at least one light-state data frame at a time before and/or after the determined target time, the following optional implementation manner may be adopted: determining, for each phase, a preset light color sequence and a preset duration of each light color of the phase in the timing scheme; obtaining a light color state and a light color countdown of the phase at a time before and/or after the target time according to the preset light color sequence and the preset duration of each light color as well as a light color state and a light color countdown of the phase in the target light-state data frame; and generating, according to light color states and light color countdowns of phases at a same time, the at least one light-state data frame at the time before and/or after the target time.

In this embodiment, when S104 is performed to generate at least one light-state data frame at a time before and/or after the determined target time, a preset number of light-state data frames at the time before and/or after the target time. for example, light-state data frames located in a window are restored in a manner of setting the window where the light-state data frames are located.

In this embodiment, the light-state data frames generated by performing S104 are correct light-state data frames. Therefore, for a same time, light-state data frames in the light-state data stream that are inconsistent with the generated light-state data frames are replaced with the generated light-state data frames, to achieve a purpose of correcting the acquired light-state data stream, thereby improving accuracy of the light-state data stream.

In addition, in this embodiment, after S104 is performed to generate at least one light-state data frame, the generated light-state data frames may also be sorted directly in chronological order, so as to take a sorting result as a correct light-state data stream.

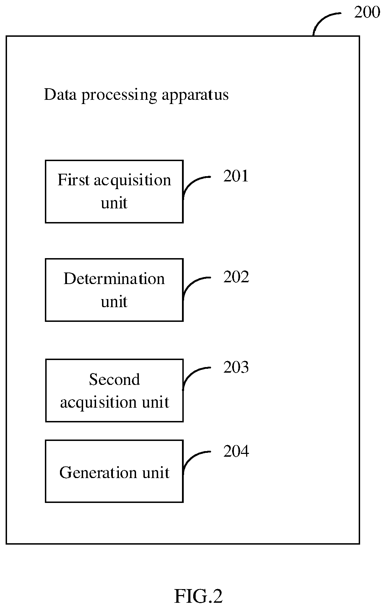

FIG. 2 is a schematic diagram of a second embodiment according to the present disclosure. As shown in FIG. 2, a data processing apparatus 200 according to this embodiment includes:
a first acquisition unit 201 configured to acquire a light-state data stream of a signal machine, the light-state data stream including a plurality of light-state data frames arranged in chronological order;
a determination unit 202 configured to determine a target light-state data frame in the light-state data stream and a target time of the target light-state data frame;
a second acquisition unit 203 configured to acquire a timing scheme of the signal machine; and
a generation unit 204 configured to generate, according to the timing scheme and the target light-state data frame, at least one light-state data frame at a time before and/or after the target time.

The light-state data stream acquired by the first acquisition unit 201 includes a plurality of light-state data frames arranged in chronological order. Each light-state data frame includes light-state information of all phases of the signal machine at corresponding times. The light-state information of each phase includes information such as a light color state and a light color countdown of the phase at a corresponding time.

In this embodiment, after the first acquisition unit 201 acquires the light-state data stream, the determination unit 202 determines a target light-state data frame in the light-state data stream and a target time of the target light-state data frame.

Specifically, when the determination unit 202 determines a target light-state data frame in the light-state data stream, the following optional implementation manner may be adopted: selecting two light-state data frames from the light-state data stream; comparing the two light-state data frames selected; and taking the latter of the two light-state data frames as the target light-state data frame in a case where a comparison result is the two light-state data frames being inconsistent with each other.

When the determination unit 202 selects two light-state data frames from the light-state data stream, the following optional implementation manner may be adopted: setting a window of a preset length; sliding the window in the light-state data stream at a preset step size; and selecting a first light-state data frame and a last light-state data frame located in the window.

In addition, when the determination unit 202 selects two light-state data frames from the light-state data stream, any two adjacent light-state data frames may be selected, or a light-state data frame at a current time and a light-state data frame at a previous time may be selected.

After the determination unit 202 determines the target light-state data frame, the target time of the target light-state data frame is determined. In this embodiment, the target time determined by the determination unit 202 is a time at which the signal machine sends the target light-state data frame.

In this embodiment, after the determination unit 202 determines the target light-state data frame and the target time corresponding thereto, the second acquisition unit 203 acquires a timing scheme of the signal machine.

The timing scheme acquired by the second acquisition unit 203 is configured to allow the signal machine to control a light color and a light color countdown of each phase. The acquired timing scheme includes information such as a preset light color sequence of each phase and a preset duration of each light color.

If the timing scheme of the signal machine does not change under any circumstance, the second acquisition unit 203 may directly acquire a preset timing scheme as the timing scheme of the signal machine.

However, in an actual scenario, traffic conditions at road intersections may change rapidly, and in order to better control the traffic conditions at the road intersections, the timing scheme of the signal machine may also change constantly. Since the timing scheme of may affect the accuracy of the generated correct light-state data frame, in this embodiment, a timing scheme corresponding to the determined target light-state data frame is required to be acquired.

In order to further improve the accuracy of the generated correct light-state data frame, when the second acquisition unit 203 acquires the timing scheme of the signal machine, the following optional implementation manner may be adopted: acquiring the timing scheme of the signal machine at the determined target time. That is, the second acquisition unit 203 can ensure correlation between the acquired timing scheme and the determined target light-state data frame.

In this embodiment, after the second acquisition unit 203 acquires the timing scheme of the signal machine, the generation unit 204 generates, according to the acquired timing scheme and the target light-state data frame, at least one light-state data frame at a time before and/or after the determined target time. In this embodiment, the light-state data frames generated by the generation unit 204 are correct light-state data frames corresponding to various times.

Specifically, when the generation unit 204 generates, according to the timing scheme and the target light-state data frame, at least one light-state data frame at a time before and/or after the determined target time, the following optional implementation manner may be adopted: determining, for each phase, a preset light color sequence and a preset duration of each light color of the phase in the timing scheme; obtaining a light color state and a light color countdown of the phase at a time before and/or after the target time according to the preset light color sequence and the preset duration of each light color as well as a light color state and a light color countdown of the phase in the target light-state data frame; and generating, according to light color states and light color countdowns of phases at a same time, the at least one light-state data frame at the time before and/or after the target time.

When the generation unit 204 generates at least one light-state data frame at a time before and/or after the determined target time, a preset number of light-state data frames at the time before and/or after the target time. For example, light-state data frames located in a window are restored in a manner of setting the window where the light-state data frames are located.

The light-state data frames generated by the generation unit 204 are correct light-state data frames. Therefore, for a same time, the generation unit 204 may replace light-state data frames in the light-state data stream that are inconsistent with the generated light-state data frames with the generated light-state data frames, to achieve a purpose of correcting the acquired light-state data stream, thereby improving accuracy of the light-state data stream.

In addition, after the generation unit 204 generates at least one light-state data frame, the generated light-state data frames may also be sorted directly in chronological order, so as to take a sorting result as a correct light-state data stream.

Acquisition, storage and application of users' personal information involved in the technical solutions of the present disclosure comply with relevant laws and regulations, and do not violate public order and moral.

According to embodiments of the present disclosure, the present disclosure further provides an electronic device, a readable storage medium and a computer program product.

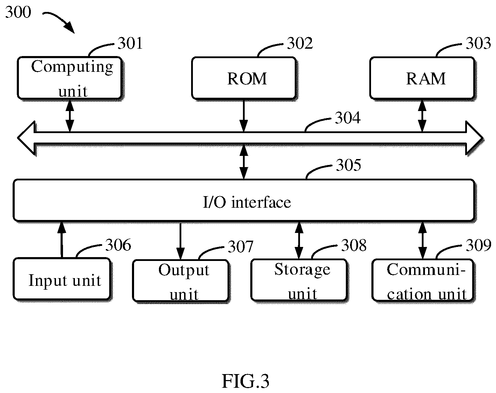

FIG. 3 is a block diagram of an electronic device configured to perform a data processing method according to embodiments of the present disclosure. The electronic device is intended to represent various forms of digital computers, such as laptops, desktops, workbenches, personal digital assistants, servers, blade servers, mainframe computers and other suitable computing devices. The electronic device may further represent various forms of mobile devices, such as personal digital assistants, cellular phones, smart phones, wearable devices and other similar computing devices. The components, their connections and relationships, and their functions shown herein are examples only, and are not intended to limit the implementation of the present disclosure as described and/or required herein.

As shown in FIG. 3, the device 300 includes a computing unit 301, which may perform various suitable actions and processing according to a computer program stored in a read-only memory (ROM) 302 or a computer program loaded from a storage unit 308 into a random access memory (RAM) 303. The RAM 303 may also store various programs and data required to operate the device 300. The computing unit 301, the ROM 302 and the RAM 303 are connected to one another by a bus 304. An input/output (I/O) interface 305 may also be connected to the bus 304.

A plurality of components in the device 300 are connected to the I/O interface 305, including an input unit 306, such as a keyboard and a mouse; an output unit 307, such as various displays and speakers; a storage unit 308, such as disks and discs; and a communication unit 309, such as a network card, a modem and a wireless communication transceiver. The communication unit 309 allows the device 300 to exchange information/data with other devices over computer networks such as the Internet and/or various telecommunications networks.

The computing unit 301 may be a variety of general-purpose and/or special-purpose processing components with processing and computing capabilities. Some examples of the computing unit 301 include, but are not limited to, a central processing unit (CPU), a graphics processing unit (GPU), various artificial intelligence (AI) computing chips, various computing units that run machine learning model algorithms, a digital signal processor (DSP), and any appropriate processor, controller or microcontroller, etc. The computing unit 301 performs the methods and processing described above, such as the data processing method. For example, in some embodiments, the data processing method may be implemented as a computer software program that is tangibly embodied in a machine-readable medium, such as the storage unit 308.

In some embodiments, part or all of a computer program may be loaded and/or installed on the device 300 via the ROM 302 and/or the communication unit 309. One or more steps of the data processing method described above may be performed when the computer program is loaded into the RAM 303 and executed by the computing unit 301. Alternatively, in other embodiments, the computing unit 301 may be configured to perform the data processing method described in the present disclosure by any other appropriate means (for example, by means of firmware).

Various implementations of the systems and technologies disclosed herein can be realized in a digital electronic circuit system, an integrated circuit system, a field programmable gate array (FPGA), an application-specific integrated circuit (ASIC), an application-specific standard product (ASSP), a system on chip (SOC), a load programmable logic device (CPLD), computer hardware, firmware, software, and/or combinations thereof. Such implementations may include implementation in one or more computer programs that are executable and/or interpretable on a programmable system including at least one programmable processor, which can be special or general purpose, configured to receive data and instructions from a storage system, at least one input apparatus, and at least one output apparatus, and to transmit data and instructions to the storage system, the at least one input apparatus, and the at least one output apparatus.

Program codes configured to implement the methods in the present disclosure may be written in any combination of one or more programming languages. Such program codes may be supplied to a processor or controller of a general-purpose computer, a special-purpose computer, or another programmable data processing apparatus to enable the function/operation specified in the flowchart and/or block diagram to be implemented when the program codes are executed by the processor or controller. The program codes may be executed entirely on a machine, partially on a machine, partially on a machine and partially on a remote machine as a stand-alone package, or entirely on a remote machine or a server.

In the context of the present disclosure, machine-readable media may be tangible media which may include or store programs for use by or in conjunction with an instruction execution system, apparatus or device. The machine-readable media may be machine-readable signal media or machine-readable storage media. The machine-readable media may include, but are not limited to, electronic, magnetic, optical, electromagnetic, infrared, or semiconductor systems, apparatuses or devices, or any suitable combinations thereof. More specific examples of machine-readable storage media may include electrical connections based on one or more wires, a portable computer disk, a hard disk, a random access memory (RAM), a read-only memory (ROM), an erasable programmable read only memory (EPROM or flash memory), an optical fiber, a compact disk read only memory (CD-ROM), an optical storage device, a magnetic storage device, or any suitable combination thereof.

To provide interaction with a user, the systems and technologies described here can be implemented on a computer. The computer has: a display apparatus (e.g., a cathode-ray tube (CRT) or a liquid crystal display (LCD) monitor) for displaying information to the user; and a keyboard and a pointing apparatus (e.g., a mouse or trackball) through which the user may provide input for the computer. Other kinds of apparatuses may also be configured to provide interaction with the user. For example, a feedback provided for the user may be any form of sensory feedback (e.g., visual, auditory, or tactile feedback); and input from the user may be received in any form (including sound input, voice input, or tactile input).

The systems and technologies described herein can be implemented in a computing system including background components (e.g., as a data server), or a computing system including middleware components (e.g., an application server), or a computing system including front-end components (e.g., a user computer with a graphical user interface or web browser through which the user can interact with the implementation mode of the systems and technologies described here), or a computing system including any combination of such background components, middleware components or front-end components. The components of the system can be connected to each other through any form or medium of digital data communication (e.g., a communication network). Examples of the communication network include: a local area network (LAN), a wide area network (WAN) and the Internet.

The computer system may include a client and a server. The client and the server are generally far away from each other and generally interact via the communication network. A relationship between the client and the server is generated through computer programs that run on a corresponding computer and have a client-server relationship with each other. The server may be a cloud server, also known as a cloud computing server or cloud host, which is a host product in the cloud computing service system to solve the problems of difficult management and weak business scalability in the traditional physical host and a virtual private server (VPS). The server may also be a distributed system server, or a server combined with blockchain.

It should be understood that the steps can be reordered, added, or deleted using the various forms of processes shown above. For example, the steps described in the present disclosure may be executed in parallel or sequentially or in different sequences, provided that desired results of the technical solutions disclosed in the present disclosure are achieved, which is not limited herein.

The above specific implementations do not limit the extent of protection of the present disclosure. Those skilled in the art should understand that various modifications, combinations, sub-combinations, and replacements can be made according to design requirements and other factors. Any modifications, equivalent substitutions and improvements made within the spirit and principle of the present disclosure all should be included in the extent of protection of the present disclosure.

## Claims

1. A data processing method, **characterized by** comprising:
acquiring (S101) a light-state data stream of a signal machine, the light-state data stream comprising a plurality of light-state data frames arranged in chronological order;
determining (SI02) a target light-state data frame in the light-state data stream and a target time of the target light-state data frame;
acquiring (S103) a timing scheme of the signal machine; and
generating (S104), according to the timing scheme and the target light-state data frame, at least one light-state data frame at a time before and/or after the target time.

2. The data processing method according to claim 1, wherein the step of determining a target light-state data frame in the light-state data stream comprises:
selecting two light-state data frames from the light-state data stream;
comparing the two light-state data frames selected; and
taking the latter of the two light-state data frames as the target light-state data frame in a case where a comparison result is the two light-state data frames being inconsistent with each other.

3. The data processing method according to claim 2, wherein the step of selecting two light-state data frames from the light-state data stream comprises:
setting a window of a preset length;
sliding the window in the light-state data stream at a preset step size; and
selecting a first light-state data frame and a last light-state data frame located in the window.

4. The data processing method according to claim 1, wherein the step of acquiring a timing scheme of the signal machine comprises:
acquiring the timing scheme of the signal machine at the target time.

5. The data processing method according to claim 1, wherein the step of generating, according to the timing scheme and the target light-state data frame, at least one light-state data frame at a time before and/or after the target time comprises:
determining, for each phase, a preset light color sequence and a preset duration of each light color of the phase in the timing scheme;
obtaining a light color state and a light color countdown of the phase at a time before and/or after the target time according to the preset light color sequence and the preset duration of each light color as well as a light color state and a light color countdown of the phase in the target light-state data frame; and
generating, according to light color states and light color countdowns of phases at a same time, the at least one light-state data frame at the time before and/or after the target time.

6. A data processing apparatus (200), **characterized by** comprising:
a first acquisition unit (201) configured to acquire a light-state data stream of a signal machine, the light-state data stream comprising a plurality of light-state data frames arranged in chronological order;
a determination unit (202) configured to determine a target light-state data frame in the light-state data stream and a target time of the target light-state data frame;
a second acquisition unit (203) configured to acquire a timing scheme of the signal machine; and
a generation unit (204) configured to generate, according to the timing scheme and the target light-state data frame, at least one light-state data frame at a time before and/or after the target time.

7. The data processing apparatus (200) according to claim 6, wherein, when determining a target light-state data frame in the light-state data stream, the determination unit (202) is specifically configured to:
select two light-state data frames from the light-state data stream;
compare the two light-state data frames selected; and
take the latter of the two light-state data frames as the target light-state data frame in a case where a comparison result is the two light-state data frames being inconsistent with each other.

8. The data processing apparatus (200) according to claim 7, wherein, when selecting two light-state data frames from the light-state data stream, the determination unit (202) is specifically configured to:
set a window of a preset length;
slide the window in the light-state data stream at a preset step size; and
select a first light-state data frame and a last light-state data frame located in the window.

9. The data processing apparatus (200) according to claim 6, wherein, when acquiring a timing scheme of the signal machine, the second acquisition unit (203) is specifically configured to:
acquire the timing scheme of the signal machine at the target time.

10. The data processing apparatus (200) according to claim 6, wherein, when generating, according to the timing scheme and the target light-state data frame, at least one light-state data frame at a time before and/or after the target time, the generation unit (204) is specifically configured to:
determine, for each phase, a preset light color sequence and a preset duration of each light color of the phase in the timing scheme;
obtain a light color state and a light color countdown of the phase at a time before and/or after the target time according to the preset light color sequence and the preset duration of each light color as well as a light color state and a light color countdown of the phase in the target light-state data frame; and
generate, according to light color states and light color countdowns of phases at a same time, the at least one light-state data frame at the time before and/or after the target time.

11. An electronic device, comprising:
at least one processor; and
a memory in communication connection with the at least one processor; wherein
the memory stores instructions executable by the at least one processor, and the instructions are executed by the at least one processor to enable the at least one processor to perform the data processing method according to any one of claims 1-5.

12. A non-transitory computer-readable storage medium storing computer instructions, wherein the computer instructions are configured to cause a computer to perform the data processing method according to any one of claims 1-5.

13. A computer program product, comprising a computer program, wherein, when the computer program is executed by a processor, the data processing method according to any one of claims 1-5 is performed.
